Europäisches Patentamt

European Patent Office

Office européen des brevets

(11) Publication number: **0 161 364**
**A1**

(12) **EUROPEAN PATENT APPLICATION**

(21) Application number: **84307952.6**

(22) Date of filing: **16.11.84**

(51) Int. Cl.⁴: **G 03 B 21/64**

(30) Priority: **21.03.84 JP 53988/84**

(43) Date of publication of application: **21.11.85**
**Bulletin 85/47**

(84) Designated Contracting States: **DE GB**

(71) Applicant: **SLIDEX CORPORATION, No. 15, 2-Chome, Senkawa-Machi Toshima-Ku, Tokyo (JP)**

(72) Inventor: **Ozeki, Jiro, No. 15, 2-Chome Senkawa-Machi, Toshima-Ku Tokyo (JP)**

(74) Representative: **Arthur, John William et al, FITZPATRICKS 4 West Regent Street, Glasgow G2 1RS Scotland (GB)**

(54) **Pocket for use in housing film mounted on mount.**

(57) Disclosed herein is a substantially rectangular mounted film-housing pocket comprising a back surface plate made of transparent or translucent sheet, and a front surface plate made of transparent sheet and sealed to the back surface plate. The front surface plate is sealed to the back surface plate in a form of a U-shaped manner extending in three direction along the side portions and the bottom portions of the pocket except that a non-joining portion where the front and back surface portions are not joined together is provided at at least one of side portions and the bottom portion of the pocket. A film-housing pocket assembly in which such pockets are arranged on the substantially rectangular back surface plate in a matrix manner is also disclosed.

## POCKET FOR USE IN HOUSING FILM MOUNTED ON MOUNT

The present invention relates to a film-housing pocket which is suitably used for arranging and storing a film mounted on a mount, and a film-housing pocket assembly.

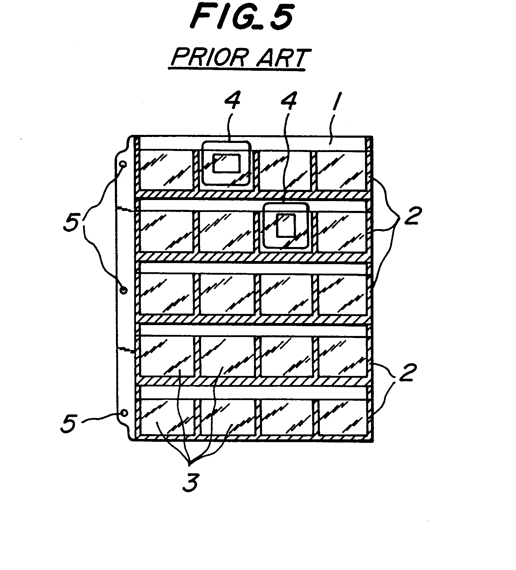

There have been so far widely used for the film-housing pocket assembly for arranging and storing the slide films each mounted on a mount, and such a conventional film-housing pocket assembly is shown by way of example in Fig. 5.

According to this mounted film-housing pocket assembly, five substantially rectangular front surface plates 2 made of a transparent synthetic resin sheet are arranged in parallel to one another from the right to the left onto a rectangular back surface plate 1 of a transparent or translucent synthetic resin sheet, and the back surface plate 1 and each of the front surface plates 2 are similarly sealed at shadow portions shown in Fig. 5 in three sides, for instance, through thermal fusion to form a plurality of slide film pockets. In the illustrated embodiment, the laterally and vertically arranged pockets 3 exhibit functions of effectively arranging and storing the slide films 4 when the mounted slide film 4 is completely inserted into the interior of the pocket 3 through its mouth as shown in Fig. 5.

In Fig. 5, a reference numeral 5 shows

0161364

a binding hole of the mounted film-housing assembly in which a plurality of housing pockets 3 are laterally and vertically arranged.

In such a prior art, in order that the slide film inserted into the pocket 3 may be assuredly prevented from slipping out of the pocket 3 and from being inclined within the interior of the pocket 3 so as to facilitate preliminary inspecting operation of a film image, the width of the pocket 3 is made slightly wider than that of the slide film 4 with the mount. Further, since the housing pocket 3 is constituted by joining the back surface plate 1 and the front surface plate 2 in a form of a U-shaped completely continuous three direction sealing, when the slide film 4 attached to a relatively thick mount made of plastic, paper or the like is assuredly pushed into the housing pocket 31 down to a specified location, the frictional force between the peripheral portion of the mount and the peripheral portion of the pocket becomes considerably larger, so that a fairly large pushing insertion force is necessary. This is more serious in the case where the front and back surface plates become hard as in winter.

In addition, since the three sides of the pocket 3 are sealed in their entire lengths according to this prior art, the pocket has the drawback that deflection is produced at either one of the front or back surface plates and in the worst case, the whole

- 3 -

0161364

pocket 3 and in turn the whole film-housing pocket assembly are deflected in either direction, when the mounted slide film 4 is pushed into the pocket 3.

It is therefore an object of the present invention to provide a mounted film-housing pocket which eliminates the above drawbacks possessed by the prior art.

More specifically, the object of the present invention is to provide a mounted film-housing pocket which facilitates the insertion of a mounted film into the pocket at a predetermined position through decreasing the frictional force between the peripheral portion of a mount and the peripheral portion of the pocket when the mounted film is pushed into the pocket.

It is another object of the invention to provide a mounted film-housing pocket which is free from the deflection in either direction of the whole pocket when the mounted film is pushed into the pocket.

It is a still another object of the invention to provide a mounted film-housing pocket assembly in which such pockets as mentioned above are vertically and laterally arranged for storing a plurality of the slide films each mounted on the mount.

According to the mounted film-housing pocket of the present invention, a non-joining portion where the front and back surface plates are not joined together is provided at at least one of the side portions and bottom portion of the pocket constituted by sealing the back surface plate and the front surface plate together at the side portions and bottom portion, whereby the frictional force between the mount of the mounted film and the peripheral portions of the pocket is effectively reduced to extremely facilitate the fully pushing of the film into the pocket.

According to the another aspect of the invention, there is a provision of a mounted film-housing pocket assembly comprising a substantially rectangular back surface plate made of transparent or translucent sheet, and a plurality of transversely long front surface plates made of transparent sheet, said front surface plates being arranged on the back surface plate while being vertically spaced from the adjacent ones, and sealed to the back surface plate at the bottom edge and vertically spaced lines so as to define film-housing pockets each defined by the bottom edge and the adjacent vertical lines and between the front surface plate and the back surface plate in such a manner that a non-joining portion where the front and back surface plates are not joined together is formed in the sealing portions of each of the film-housing pockets at at least one of the side portions and the bottom portion thereof.

These and other objects, features, advantages of the invention will be well appreciated upon reading of the following description of the invention when considered in connection with the attached drawings and the appended claims with the understanding that some modifications, variations and changes could be easily made by the skilled in the art to which the invention pertains without departing from the spirit of the invention and the scope of the claims.

The invention will be described more in detail with reference to the following drawings, wherein:

Figs. 1-4 are plan views of embodiments according to the present invention, respectively; and

Fig. 5 is a plan view of a film-housing pocket assembly of the prior art.

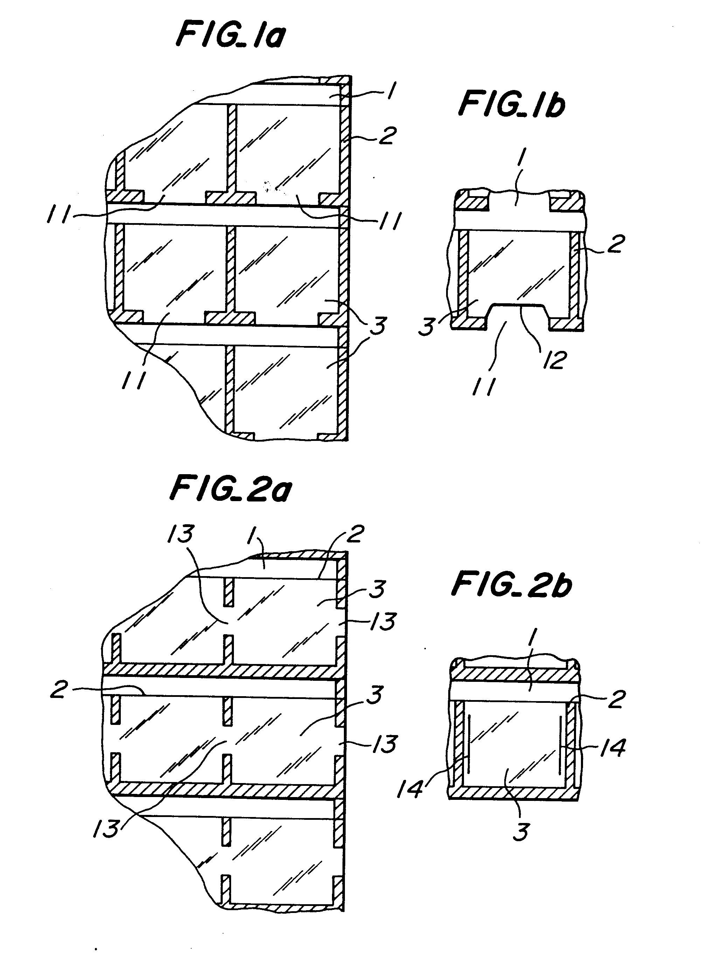

Fig. 1 shows embodiments according to the present invention. In the embodiment as shown in Fig. 1a, a front surface plate 2 made of a transparent resin sheet is sealed to a back surface plate 1 made of a transparent or translucent synthetic resin sheet through thermal fusion or adhesion as shown by shadow portions in Fig. 1a to form a mounted film-housing pocket 3 of a substantially rectangular shape, provided that a non-joining portion 11 where the front surface plate 1 and the back surface plate 2 are not joined together is provided at the central portion of the bottom portion of the housing pocket 3, while in the embodiment of Fig. 1b, a cut portion 12 also serving as a finger hole for taking out the slide film 4 is provided in the front surface plate 2 at the non-joining portion 11. A plurality of the film-housing pockets are laterally and vertically formed between the back surface plate and the transversely long front surface plate in a matrix manner so as to constitute a film-housing pocket assembly.

According to the embodiment, when the mounted slide film 5 is inserted into the pocket 3 down to the predetermined position, the non-joined portion 11 functions to effectively reduce the resistance in pushing the slide film 4 particularly in the vicinity of the bottom portion of the pocket 3, so that the pushing of the film into the predetermined location of the pocket is extremely facilitated.

According to the embodiment as shown in Fig. 1b, since the cut portion 12 provided at the non-joining portion 11 acts to completely eliminate the resistance in pushing-in the slide film 4 thereabout, the pushing-in operation of the slide film 4 is further facilitated. Since this cut portion 12 also functions as the finger hole, the take-out of the slide film pushed down into the predetermined location of the pocket 3 therefrom is facilitated.

Fig. 2 shows plan views of further embodiments according to the present invention, Fig. 2a being the embodiment in which non-joining portions 13 where the front and back surface plates 2 and 1 are not joined is formed at the central portions of both side portions of the pocket 3 in the depth direction thereof. In the embodiment of Fig. 2b, a cut line 14 extending in the depth direction of the pocket 3 is provided on each side portion of the pocket 3 and at least one of the front surface plate 2 and the back surface plate 1. Since the cut lines 14 serve to separate at least the one of the front and back surface plates 2 and 1 from the sealing portions on the both side portions of the pocket, they act as they were non-joining portions between the front and back surface plates 2 and 1, and facilitate the deformation of the front and back surface plates positioned between the cut lines 14, 14, in the spacing direction.  Therefore, the non-joining portion referred to in this specification includes such a cut line.

According to the embodiments shown in Fig. 2, since the non-joining portion 13 or cut line 14 facilitates the deformation of, for instance, the front surface plate 2 to reduce the resistance in pushing the slide film 4 into the pocket 3 at the both side portions, it is made easier to completely push the slide film into the pocket 3.

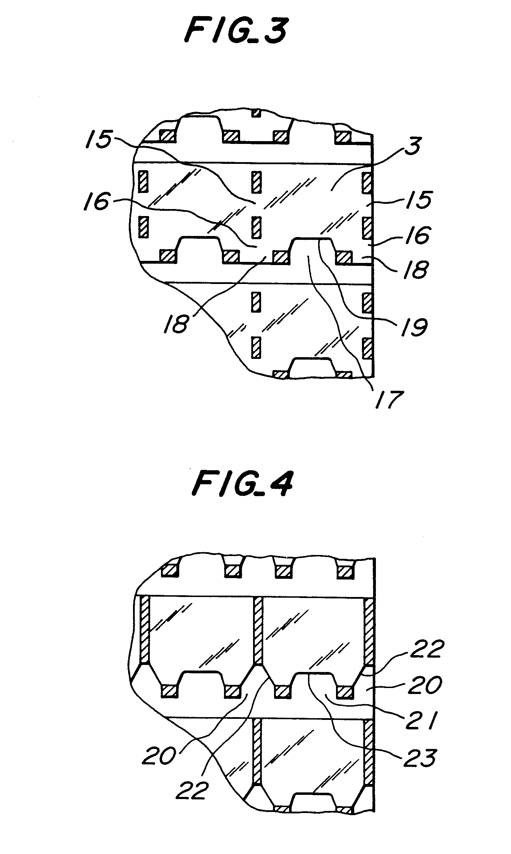

In embodiments of Figs. 3 and 4, non-joining portions between the front and back surface plates 2 and 1 are provided onto the both side portions and the bottom portion of the pocket 3, so that the resistance in pushing the slide film 4 into the pocket is reduced. In Fig. 3, the housing pocket is so constituted that the non-joining portions 15 and 16 are formed at the central portion and the lower end of each of the both side portions of the pocket 3, while the non-joining portions 17 and 18 are provided at the central portion and the both side portions of the bottom portions of the pocket. Further a cut portion 19 is formed in the front surface plate 2 at the non-joining portion 17. In Fig. 4, the housing pocket 3 is so constituted that a non-joining portion 20 between the front and back surface plates 2 and 1 is formed at a portion extending from the lower end portion of the side portion of the pocket to the adjacent side portion of the bottom portion of the pocket 3, and a non-joining portion 21 is formed at the central portion of the bottom portion. Further, a substantially triangular cut portion 22 and a substantially rectangular portion 23 are formed in the front surface plate 2 at the non-joining portion 20 and 21 respectively.

As a matter of course, it is possible to provide such a cut portion as referred to in the above embodiments on the back surface plate in addition to or instead of the front surface plate.

According to the embodiments of Figs. 3 and 4, since there are non-joining portions at the side portions and the bottom portion, the resistance in pushing in the slide film 4 which is conferred by the frictional force between the slide film 4 and the front and back surface plates 2 and 1 can be reduced to a large extent.

As mentioned hereinbefore based on the illustrated embodiments, the location, number, profile and so forth of the non-joining portions may be appropriately varied depending upon the necessity so long as the intrinsic function of the housing pocket is not deteriorated.

Consequently, according to the present invention, since a non-joining portion where the front and back surface plates are not joined together is provided at at least one of the side portions and the bottom portion of the pocket which is formed by sealing the front surface plate to the back surface plate, the resistance in pushing the mounted film into the pocket at a predetermined location is largely decreased to extremely enhance the operationability.

While the invention has been described in its preferred embodiments according to the invention, it is to be understood that the invention may be practiced otherwise than as specifically described and that any various modification may be covered in the appended claims as fallen within the true spirit and scope of the invention and claims.

CLAIMS

1.      A substantially rectangular mounted film-housing pocket, comprising a back surface plate (1) made of transparent or translucent sheet, and a front surface plate (2) made of transparent sheet and being sealed to the back surface plate (1) at both sides and a bottom thereof, characterised in that a non-joining portion (11) where the front and back surface plates (1, 2) are not joined together is provided at at least one of the side portions and the bottom portion of the pocket (3).

2.      The film-housing pocket as defined in claim 1, characterised in that the non-joining portion (11) is provided at the central portion of the bottom portion of the pocket (3).

3.      The film-housing pocket as defined in claim 2, characterised in that a cut portion (12) as a finger hole is provided in the front surface plate (2) at the non-joining portion (11).

4.      The film-housing pocket as defined in claim 1, characterised in that the non-joining portion (11) is provided at the central portion of each of the side portions of the pocket.

5.      The film-housing pocket as defined in claim 1, characterised in that the non-joining portion is a slit (14) provided extending in a vertical direction in the vicinity of each of the side portions of the pocket (3) and in the front surface plate (2).

6.      The film-housing pocket as defined in claim 2, characterised in that a non-joining portion (13) is further provided at the central portion of each side portion of the pocket (3).

7.      The film-housing pocket as defined in claim 2 or 6, characterised in that a non-joining

- 11 -

0161364

portion (18) is further provided at each corner between the side portion and the bottom portion of the pocket (3).

8.      The film-housing pocket as defined in claim 7, characterised in that the non-joining portion is formed by cutting each of the corners (20) of the pocket.

9.      A mounted film-housing pocket assembly comprising a substantially rectangular back surface plate (1) made of transparent or translucent sheet, and a plurality of transversely arranged long front surface plates (2) made of transparent sheet, characterised in that said front surface plates (2) are arranged on the back surface plate (1) while being vertically spaced from the adjacent ones, and sealed to the back surface plate (1) at the bottom edge and vertically spaced lines so as to define film-housing pockets (3) each defined by the bottom edge and the adjacent vertical lines and between the front surface plate (2) and the back surface plate (1) in such a manner that a non-joining portion (11) where the front and back surface plates (1,2) are not joined together is formed in the sealing portions of each of the film-housing pockets (3) at at least one of the side portions and the bottom portion thereof.

10.     The film housing pocket assembly as defined in claim 9, characterised in that the non-joining portion (11) is provided at the central portion of the bottom portion of each of the film-housing pockets (3).

11.     The film-housing pocket assembly as defined in claim 10, characterised in that a cut portion (12) as a finger hole is provided in the front surface plate (2) at the non-joining portion (11) of each of the film-housing pockets (3).

0161364

12. The film-housing pocket assembly as defined in claim 9, characterised in that the non-joining portion (11) is provided at the central portion of each of the side portion of each of the film-housing pockets.

13. The film-housing pocket assembly as defined in claim 9, characterised in that the non-joining portion is a slit (14) provided extending in a vertical direction in the vicinity of each of the side portions of each of the film-housing pockets (3) and in the front surface plate (2).

14. The film-housing pocket assembly as defined in claim 10, characterised in that a non-joining portion (13) is further provided at the central portion of each side portion of each of the film-housing pockets (3).

15. The film-housing pocket assembly as defined in claim 10 or 14, characterised in that a non-joining portion (18) is further provided at each corner between the side portion and the bottom portion of each of the film-housing pockets.

16. The film-housing pocket as defined in claim 15, characterised in that the non-joining portion is formed by cutting each of the corners (20) of each of the pockets.

**FIG.1a**

**FIG.1b**

**FIG.2a**

**FIG.2b**

FIG_3

FIG_4

## FIG_5
### PRIOR ART

**European Patent Office**

**EUROPEAN SEARCH REPORT**

016136/4

Application number

EP 84 30 7952

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 161 130 (W. CROOKES)<br>* Pages 1,2; figures 1-3 * | 1 | G 03 B 21/64 |
| A | US-A-2 968 882 (J. OZEKI)<br>* Claims 1,2; figure 1 * | 1 | |
| A | GB-A-2 016 738 (SLIDEX CORP.)<br>* Pages 1,2; figures 1-4 * | 1 | |
| A | DE-A-2 201 381 (HERMANN & KRAEMER)<br>* Pages 6-11; figures 1-3 * | 1 | |
| A | US-A-3 696 538 (R. NAST)<br>* Claims 2-5; figures 1-9 * | 1 | |
| | ----- | | **TECHNICAL FIELDS SEARCHED (Int. Cl.4)**<br><br>G 03 B 21/64<br>G 02 B 27/02<br>G 03 B 21/54 |

The present search report has been drawn up for all claims

| Place of search | Date of completion of the search | Examiner |
|---|---|---|
| THE HAGUE | 02-07-1985 | BOEYKENS J.W. |